(19) Europäisches Patentamt
European Patent Office
Office européen des brevets

(11) **EP 1 798 257 B1**

(12) **EUROPEAN PATENT SPECIFICATION**

(45) Date of publication and mention
of the grant of the patent:
**19.05.2010  Bulletin 2010/20**

(51) Int Cl.:
***C08L 15/00*** (2006.01)  ***C08L 21/00*** (2006.01)
***C08L 7/00*** (2006.01)

(21) Application number: **06025675.7**

(22) Date of filing: **12.12.2006**

(54) **Rubber composition for inner liner and tire having an inner liner using the same rubber composition**

Kautschukzusammensetzung für Innenschicht und Reifen, der diese enthält

Composition de caoutchouc pour gomme intérieure et pneu comprenant celle-ci

(84) Designated Contracting States:
**DE FR**

(30) Priority: **19.12.2005  JP 2005364631**
**28.12.2005  JP 2005379010**

(43) Date of publication of application:
**20.06.2007  Bulletin 2007/25**

(73) Proprietor: **SUMITOMO RUBBER INDUSTRIES, LTD.**
**Hyogo-ken (JP)**

(72) Inventors:
• **Hirayama, Tomoaki**
**3-chome**
**Chuo-ku**
**Kobe-shi**
**Hyogo-ken (JP)**
• **Wada, Takao**
**3-chome**
**Chuo-ku**
**Kobe-shi**
**Hyogo-ken (JP)**
• **Uchida, Mamoru**
**3-chome**
**Chuo-ku**
**Kobe-shi**
**Hyogo-ken (JP)**
• **Tomita, Takehiro**
**3-chome**
**Chuo-ku**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A1- 0 448 905     EP-A1- 0 933 391**
**EP-A1- 1 577 341     KR-A- 2004 009 523**

Remarks:
The file contains technical information submitted after the application was filed and not included in this specification

**Description**

The present invention relates to a rubber composition for an inner liner and a tire having an inner liner using the rubber composition.

In general, a butyl rubber is used in an inner liner of a tire in order to reduce air permeation. However, a butyl rubber has extremely less double bonds relating to crosslinking, or some butyl rubbers have no double bond, therefore, co-crosslinking property with a carcass ply cord in contact with an inner liner or with an adhesive of a carcass ply cord such as a diene latex is poor, and if a distance between an inner liner and a carcass ply cord is short, or if an inner liner is in contact with a carcass ply cord, there is a fear of causing peeling between the inner liner and the carcass ply cord.

Therefore, in order to ensure a gage, for example, a rubber layer using a diene rubber comprising a natural rubber and a styrene-butadiene rubber is generally inserted between an inner liner and a carcass ply.

However, if the rubber layer to be inserted between an inner liner and a carcass ply is too thick, there is a problem such as giving an adverse effect on running performances since the weight thereof is heavy, or rolling resistance is deteriorated.

In addition, in recent years, not only there is concern about increase in oil prices and depletion of oil, but also there is such a trend that natural materials are reviewed from the viewpoint of environmental problems such as saving of resources and reinforcement of regulations on carbon dioxide gas emission. Such a trend is not exceptional on the field of tire industries, and a natural rubber (NR) has drawn attention as a substitute material for a synthetic rubber such as a styrene-butadiene rubber (SBR) which is conventionally used. Since NR has a high mechanical strength and is excellent in abrasion resistance, NR is used variously in the field of tire industries. However, since NR has a low glass transition temperature (Tg) of -60°C, there is a problem that grip performance is inferior. Further, since NR is a natural material, there are problems that ozone resistance, heat aging resistance, and weather resistance are inferior.

In order to solve these problems, a method of using ENR is proposed. Since ENR has a small air permeability, the same air permeation resistance can be obtained as in the case of using a butyl rubber (IIR) which are conventionally used, thus, ENR is suitable for an inner liner which is necessary to have air permeation resistance and rubber strength.

For example, JP-A-2005-272508 discloses a rubber composition in which abrasion resistance and heat resistance are improved by compounding ENR, silica, calcium stearate and a silane coupling agent. However, this prior art reference carried out only a rubber composition containing 50 parts by weight of silica on the basis of 100 parts by weight of a rubber component containing ENR in an amount of 50 % by weight, and further improvement of heat ageing property was not expected.

EP 1 577 341 A1 discloses a rubber composition for a tire tread comprising 5 to 150 parts by weight of silica based on 100 parts by weight of a rubber component containing 5 to 100 % by weight of an epoxidized natural rubber, 1 to 20 parts by weight of a silane coupling agent and 0.1 to 20 parts by weight of an anionic surfactant based on 100 parts by weight of the silica.

EP 0 448 905 A1 relates to a rubber composition having an integral toe-guard component containing a rubber composition comprising, based on 100 parts by weight of the rubber, a blend of 20 to 60 parts by weight of at least one of butyl rubber and halobutyl rubber and 80 to 40 parts by weight of rubber comprised of 10 to 100 weight percent of epoxidized cis-1,4-polyisoprene rubber and up to 90 weight percent cis-1,4-polyisoprene rubber. This rubber composition may be a part of the basic inner liner of the tire.

An object of the present invention is to provide a rubber composition for an inner liner in which rubber strength can be improved without increasing rolling resistance and air permeability, and a tire having an inner liner, which comprises the rubber composition.

The present invention relates to a rubber composition for an inner liner, comprising;

silica in an amount of 30 to 40 parts by weight, and

carbon black in an amount of not more than 5 parts by weight on the basis of 100 parts by weight of a rubber component comprising not less than 30 % by weight of an epoxidized natural rubber and not more than 70 % by weight of a natural rubber; and

calcium stearate in an amount of 2 to 10 parts by weight on the basis of 100 parts by weight of the epoxidized natural rubber.

It is preferable that an epoxidization index represented by the following formula (1) of the rubber composition for an inner liner is not less than 17.

(Epoxidization index) =

(Amount of epoxidized natural rubber in the rubber component)

× (Epoxidization ratio of epoxidized natural rubber)     (1)

in which the amount of the epoxidized natural rubber in the rubber component is the ratio of the epoxidized natural rubber on the basis of the whole rubber component as percentage is not less than 17.

It is preferable that an amount of the natural rubber in the rubber component is 20 to 45 % by weight, and the rubber composition for an inner liner further comprises 5 to 30 parts by weight of a double bond-containing plasticizer on the basis of 100 parts by weight of the rubber component.

It is preferable that a process for preparing the rubber composition for an inner liner comprises:

a step (1) of preparing a kneaded product by kneading a natural rubber, silica, carbon black and calcium stearate; a step (2) of preparing a masterbatch by kneading the epoxidized natural rubber and the double bond-containing plasticizer; and a step (3) of kneading the kneaded product discharged in the step (1) and the masterbatch discharged in the step (2).

The present invention also relates to a rubber composition for an inner liner, which is obtained by the above-described process for preparing the rubber composition for an inner liner

The present invention further relates to a tire having an inner liner, which comprises the rubber composition for an inner liner.

It is preferable that the tire has a distance between an inner liner and a carcass ply cord of not more than 0.7 mm, and a thickness of the inner liner of not less than 1 mm.

The rubber composition for an inner liner of the present invention comprises a rubber component, silica, carbon black and calcium stearate.

The rubber component comprises an epoxidized natural rubber (ENR) and a natural rubber (NR). It is preferable that rubbers other than ENR and NR are not contained from the viewpoint of suppressing uses of petroleum resources.

As ENR, commercially available ENR may be used, or it is possible to epoxidize NR to be used. A process for epoxidizing NR is not specifically limited and can be carried out using processes such as a chlorohydrin process, a direct oxidation process, a hydrogen peroxide process, an alkylhydroperoxide process, and a peracid process. As the peracid process, an example is a method of reacting organic peracids such as peracetic acid and performic acid with NR.

In the rubber composition for an inner liner of the present invention, by using ENR, not only air permeation resistance can be improved, but also an inner liner can be in contact with a carcass ply since a rubber component comprising a diene rubber is used. Therefore, a rubber layer inserted between the inner liner and the carcass ply can be made thin according to the necessity, and as a result, rolling resistance can be lowered.

The epoxidization ratio of ENR is preferably not less than 5 % by mol, and more preferable not less than 10 % by mol. When the epoxidization ratio of ENR is less than 5 % by mol, there is a tendency that improvement effects for a rubber composition are not sufficient. The epoxidization ratio of ENR is preferably not more than 80 % by mol, and more preferably not more than 60 % by mol. When the epoxidization ratio of ENR is more than 80 % by mol, there is a tendency that a polymer is gelled.

ENR satisfying the above conditions are not particularly limited, but specifically, examples thereof are ENR25 and ENR50 (Kumpulan Guthrie Berhad Co.), and these ENR can be used alone or at least 2 kinds thereof can be used in combination.

As NR, those generally used in rubber industries such as RSS#3, TSR20 and KR7 can be used.

An amount of ENR in the rubber component is not less than 30 % by weight, preferably not less than 55 % by weight, more preferably not less than 70 % by weight; and an amount of NR is not more than 70 % by weight, preferably not more than 45 % by weight, more preferably not more than 30 % by weight. When the amount of ENR is less than 30 % by weight, and the amount of NR is more than 70 % by weight, air permeability resistance is inferior, and function as an inner liner is not exhibited. Further, it is most preferable that the amount of ENR is 100 % by weight.

The epoxidization ratio represented by the following formula (1):

$$\text{(Epoxidization index)} =$$

$$\text{(Amount of epoxidized natural rubber in a rubber component)}$$

$$\times \text{(Epoxidization ratio of an epoxidized natural rubber)} \qquad (1)$$

is preferably not less than 17.

In the formula (1), the amount of the epoxidized natural rubber in the rubber component represents a ratio of the epoxidized natural rubber on the basis of the whole rubber component as percentage. The ratio is 1 in the case of the maximum (the amount of the epoxidized natural rubber is 100 % by weight), and the epoxidization ratio of the epoxidized natural rubber is 100 in the case of the maximum (the epoxidization ratio of the epoxidized natural rubber is 100 % by mol).

The epoxidization index is preferably not less than 17, and more preferably not less than 20. When the epoxidization index is less than 17, there is a tendency that air permeability is higher than an inner liner using a butyl rubber, and is inferior. The epoxidization index is preferably not more than 60, and more preferably not more than 50. When the epoxidization index is more than 60, there is a tendency that heat aging characteristics are deteriorated.

As silica, there is no particular limitation, and silica prepared by a wet method or a dry method can be used.

The BET specific surface area (BET) of silica is preferably not less than 100 $m^2/g$, and more preferably not less than 120 $m^2/g$. When BET of silica is less than 100 $m^2/g$, there is a tendency that reinforcing effects due to compounding silica is not sufficient. The BET of silica is preferably not more than 300 $m^2/g$, and more preferably not more than 280 $m^2/g$. When BET of silica is more than 300 $m^2/g$, there is a tendency that dispersibility and low exothermic property of silica are deteriorated.

The amount of silica is not less than 30 parts by weight on the basis of 100 parts by weight of the rubber component, and preferably not less than 35 parts by weight. When the amount of silica is less than 30 parts by weight, reinforcing property of a rubber is lowered, and the rubber has a problem in terms of durability. The amount of silica is not more than 40 parts by weight. When the amount of silica is more than 45 parts by weight, processability is deteriorated.

In the rubber composition for an inner liner of the present invention, it is preferable that a silane coupling agent is used together with silica.

The silane coupling agent is not particularly limited, and examples thereof are sulfide silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; and nitro silane coupling agents such as 3-nitropropyltrimethoxysilane and 3-nitropropyltriethoxysilane, and chloro silane coupling agents such as 3-chloropropyltrimethoxysilane, 3-chloropropyltriethoxysilane, 2-chloroethyltrimethoxysilane, and 2-chloroethyltriethoxysilane. These silane coupling agents may be used alone, or at least 2 kinds thereof may be used in combination.

An amount of a silane coupling agent is preferably not less than 1 part by weigh on the basis of 100 parts by weight of silica, and more preferably not less than 2 parts by weight. When the amount of the silane coupling agent is less than 1 part by weight, there is a tendency that effects of improvement in dispersibility is not sufficient. The amount of the silane coupling agent is preferably not more than 20 parts by weight, and more preferably not more than 15 parts by weight. When the amount of the silane coupling agent is more than 20 parts by weight, coupling effects along with increase in an amount of silica can not be obtained, reinforcing property and abrasion resistance are lowered, and further, the cost thereof tends to be increased.

Carbon black is not particularly limited, carbon black generally used in rubber industries can be used, and examples thereof are SAF, ISAF, HAF and FEF.

A nitrogen adsorbing-specific surface area ($N_2SA$) of carbon black is preferably not less than 50 $m^2/g$, and more preferably not less than 80 $m^2/g$. When $N_2SA$ of carbon black is less than 50 $m^2/g$, there is a tendency that reinforcing effect is insufficient. $N_2SA$ of carbon black is preferably not more than 250 $m^2/g$, and more preferably not more than 230 $m^2/g$. When $N_2SA$ of carbon black is more than 250 $m^2/g$, there is a tendency that strength is lowered due to dispersion deficiency.

An amount of carbon black is not more than 5 parts by weight on the basis of 100 parts by weight of the rubber component, and preferably not more than 3 parts by weight. When the amount of carbon black is more than 5 parts by weight, a ratio in an amount of petroleum resources in the rubber composition is increased, which is accordingly unfavorable in terms of environments.

An amount of calcium stearate is not less than 2 parts by weight on the basis of 100 parts by weight of ENR, and preferably not less than 3 parts by weight. When the amount of calcium stearate is less than 2 parts by weight, effects of adding calcium stearate are not observed. The amount of calcium stearate is not more than 10 parts by weight, and preferably not more than 9 parts by weight. When the amount of calcium stearate is more than 10 parts by weight, rolling resistance is increased.

In the present invention, it is preferable that a double bond-containing plasticizer is further contained.

As the double bond-containing plasticizer, examples thereof are a linseed oil, a terpene resin, an oleyl alcohol, and a soybean oil, and these double bond-containing plasticizers may be used alone, and at least 2 kinds thereof may be used in combination. Among these, from the viewpoint of being obtainable from resources other than petroleum, at least one kind of plasticizer selected from the group consisting of a linseed oil, a terpene resin, an oleyl alcohol, and a soybean oil is preferable.

An amount of the double bond-containing plasticizer is preferably not less than 5 parts by weight on the basis of 100 parts by weight of the rubber component, and more preferably not less than 7 parts by weight. When the amount of the double bond-containing plasticizer is less than 5 parts by weight, there is no difference in physical properties, and rubber strength is not improved so much. The amount of the double bond-containing plasticizer is preferably not more than 30 parts by weight, more preferably not more than 25 parts by weight, further more preferably not more than 20 parts by weight, and particularly preferably not more than 15 parts by weight. When the amount of the double bond-containing plasticizer is more than 30 parts by weight, rubber strength is lowered.

By shifting a pH of the rubber composition around neutral by compounding ENR, silica, and calcium stearate in combination, lowering of rubber strength can be suppressed, and further, abrasion resistance and heat resistance can be improved. In the present invention, effects of improving weather resistance can be obtained by compounding carbon black.

In the rubber composition for an inner liner of the present invention, other than the above-described rubber component, silica, carbon black, calcium stearate, silane coupling agent and double bond-containing plasticizer, compounding agents generally used in rubber industries such as a wax, various antioxidants, stearic acid, zinc oxide, a vulcanizing agent such as sulfur, and various vulcanization accelerators can be suitably compounded according to the necessity.

The rubber composition for an inner liner of the present invention is preferably obtained by a preparation process comprising the following steps (1), (2) and (3).

In the step (1), a kneaded product is prepared by kneading NR, silica, carbon black and calcium stearate.

In the step (2), a masterbatch is prepared by kneading ENR and a double bond-containing plasticizer.

In the step (3), the kneaded product discharged in the step (1) and the masterbatch discharged in the step (2) are kneaded.

In the step (1), compounding agents such as a silane coupling agent, a wax, various antioxidants, stearic acid and zinc oxide can be also compounded. Further, a part of the double bond-containing plasticizer kneaded in the step (2) can be kneaded in the step (1).

In the step (2), when the masterbatch is prepared, an amount of the double bond-containing plasticizer is preferably not less than 5 parts by weigh on the basis of 100 parts by weight of ENR, and more preferably not less than 10 parts by weight. When the amount of the double bond-containing plasticizer is less than 5 parts by weight, there is a tendency that improvement effects of rubber strength is small. The amount of the double bond-containing plasticizer is preferably not more than 50 parts by weight, and more preferably not more than 30 parts by weight. When the amount of the double bond-containing plasticizer is more than 50 parts by weight, the viscosity of a mixture is lowered excessively, and there is a tendency that processability is significantly lowered.

In the step (2), the masterbatch is prepared, and in the step (3), the masterbatch is kneaded with the kneaded product obtained in the step (1), thereby, improvement effects of rubber strength are obtained.

The rubber composition for an inner liner of the present invention can be used for an inner liner from the viewpoint that air permeation resistance is excellent both before and after ageing.

The rubber composition for an inner liner of the present invention compounded with the above compounding agents according to the necessity by the above-described preparation process is extrusion-processed adjusting with the shape of an inner liner of a tire in an un-vulcanization stage, followed by molding on a tire molding machine by the above-described preparation process or general processes, and thus an unvulcanized tire is formed. A tire of the present invention is obtained by heating and pressurizing this unvulcanized tire in a vulcanizer.

In the tire of the present invention, a distance between the inner liner and the carcass ply cord is preferably not more than 0.7 mm, and more preferably not more than 0.5. This is because if the distance between the inner liner and the carcass ply cord is thinner, there are more effects on lowering rolling resistance and being light-weighted. The distance between the inner liner and the carcass ply cord is preferably not less than 0.2 mm, and more preferably not less than 0.3 mm. When the distance between the inner liner and the carcass ply cord is less than 0.2 mm, there is a tendency that the inner liner and the carcass ply cord are in contact with each other. Herein, the distance between the inner liner and the carcass ply cord indicates the minimum distance between the inner liner and the carcass ply cord, referring to a distance between the carcass ply side of the inner liner and the carcass ply cord.

In the tire of the present invention, a thickness of the inner liner is preferably not less than 1 mm, and more preferably not less than 1.2 mm. When the thickness of the inner liner is less than 1 mm, there is a tendency that air permeability is high, which is not favorable. The thickness of the inner liner is preferably not more than 2 mm, and more preferably not more than 1.6 mm. When the thickness of the inner liner is more than 2 mm, there is a tendency that not only rolling resistance is deteriorated, but also the weight cannot be saved.

EXAMPLES

The present invention is specifically explained based on Examples, but the present invention is not limited only thereto.

Various chemicals used in Examples and Comparative Examples are collectively explained in the following.

Natural rubber (NR): KR7, TSR

Epoxidized natural rubber (1) (ENR(1)): ENR25 (epoxidization ratio: 25 % by mol) available from Kumpulan Guthrie Berhad Co.

Epoxidized natural rubber (2) (ENR(2)): ENR50 (epoxidization ratio: 50 % by mol) available from Kumpulan Guthrie Berhad Co.

Carbon black: SHOWBLACK N220 ($N_2SA$: 115 $m^2/g$) available from CABOT JAPAN K.K.

Silica: Ultrasil VN3 (BET: 210 $m^2/g$) available from Degussa Co.

Calcium stearate: available from NOF Corporation

Silane coupling agent: Si69 (bis(3-triethoxysilylpropyl)tetrasulfide) available from Degussa Co.

Double bond-containing plasticizer (1): vegetable oil available from Nisshin Oillio Group, Ltd.

Double bond-containing plasticizer (2): N/B linseed oil available from Nisshin Oillio Group, Ltd.

Double bond-containing plasticizer (3): Dimerone (terpene resin) available from Yasuhara Chemical Co., Ltd.

Plasticizer without containing double bond: Epoxidized soybean oil available from KAO Corporation

Wax: SANOC Wax available from Ouchi Shinko Chemical Industrial Co., Ltd.

Antioxidant: NOCRAC 6C (N-(1,3-dimethylbutyl)-N'-phenyl-p-phenylenediamine) available from Ouchi Shinko Chemical Industrial Co., Ltd.

Stearic acid: available from NOF Corporation

Zinc oxide: Zinc Oxide No.1 available from Mitsui Mining & Smelting Co., Ltd.

Sulfur: Sulfur powder available from Tsurumi Chemical Industry Co., Ltd.

Vulcanization accelerator: NOCCELER NS (N-tert-butyl-2-benzothiazolylsulfeneamide) available from Ouchi Shinko Chemical Industrial Co., Ltd.

EXAMPLES 1 to 6 and COMPARATIVE EXAMPLES 1 and 2

According to compounding prescriptions in Table 1, chemicals other than sulfur and a vulcanization accelerator were kneaded for 2 minutes under a temperature of 150°C, using a 1.7L-banbury mixer manufactured by Kobe Steel., Ltd., to obtain a kneaded product. Then, the sulfur and vulcanization accelerator were added to the obtained kneaded product, and the mixture was kneaded for 2 minutes under a temperature of 95°C, using an open roll, to obtain an unvulcanized rubber composition. Further, the unvulcanized rubber composition was vulcanized for 30 minutes under a temperature of 150°C to obtain vulcanized rubber compositions of Examples 1 to 6 and Comparative Examples 1 and 2.

(Preparation of masterbatch (1))

Using a 1.7L-banbury mixer manufactured by Kobe Steel., Ltd., 80 parts by weight of ENR(1) and 8 parts by weight of the double bond-containing plasticizer (2) were mixed for 3 minutes at 120°C to prepare a masterbatch (1).

(Preparation of masterbatch (2))

A masterbatch (2) was prepared in the same manner as the preparation of the masterbatch (1), except for using a double bond-containing plasticizer (3) in place of the double bond-containing plasticizer (2).

(Preparation of masterbatch (3))

A masterbatch (3) was prepared in the same manner as the preparation of the masterbatch (1), except for using a plasticizer without containing a double bond in place of the double bond-containing plasticizer (2).

EXAMPLES 7 and 8

According to compounding prescriptions in Table 2, the masterbatches (1) to (3) and chemicals other than sulfur and a vulcanization accelerator were charged so as to have a filling ratio of 58 %, and the mixture was kneaded at 80 rpm until a temperature of 140°C was reached, to obtain a kneaded product (1) (step 1), using a 1.7L-banbury mixer manufactured by Kobe Steel., Ltd. Then, after discharging once, the kneaded product (1) obtained in the step (1) and the masterbatches (1) to (3) were charged so as to have a filling ratio of 58 %, and the mixture was kneaded until a temperature of 140°C was reached, to obtain a kneaded product 2 (step 2), using a 1.7L-banbury mixer manufactured by Kobe Steel., Ltd. Then, the kneaded product 2 obtained in the step 2 and the sulfur and vulcanization accelerator were kneaded for not less than 2 minutes under a temperature of not more than 100°C to obtain an unvulcanized rubber composition (step 3), using an open roll. Further, the unvulcanized rubber composition obtained in the step 3 was press-vulcanized for 30 minutes under a temperature of 150°C, and thereby, vulcanized runner compositions of Examples 7 and 8 were prepared.

(Tensile test)

Specified test pieces were cut out from the vulcanized rubber compositions, and a tensile test was carried out according to JIS K6251 "Rubber, vulcanized or thermoplastic -- Determination of tensile stress - strain properties", using No.3 dumbbell comprising rubber sheets for testing prepared by thermal oxidation deterioration for 48 hours under a temperature of 100°C. A tensile strength at break (TB) and an elongation at break (EB) were measured, product of TB and EB (TB × EB) was calculated, and rubber strength was respectively expressed as an index according to the following calculation formula, assuming the rubber strength index of Comparative Example 1 as 100. Since the larger the rubber strength index is, the more excellent rubber strength is, it indicates that the rubber composition hardly cracks.

$$\text{(Rubber strength index)} = ((TB \times EB) \text{ of each composition}) \div ((TB \times EB) \text{ of Comparative Example 1}) \times 100$$

(Viscoelasticity test)

Specified test pieces were cut out from the above vulcanized rubber compositions, and a loss tangent (tan δ) at 60°C was measured under the conditions at an initial strain of 10 %, a dynamic strain of 1 % and a frequency of 10Hz, using a viscoelasticity spectrometer manufactured by Ueshima Seisakusho Co., Ltd. Rolling resistance was respectively expressed as an index according to the following calculation formula, assuming the rolling resistance index of Comparative Example 1 as 100. The larger the rolling resistance index is, the more rolling resistance is lowered, which indicates favorable.

$$\text{(Rolling resistance index)} = (\tan \delta \text{ of Comparative Example 1}) \div (\tan \delta \text{ of each composition}) \times 100$$

(Air permeation resistance)

According to JIS K 7126 "Testing method for gas permeation rate through plastic film and sheet", an amount of air permeation was measured, using a vulcanized rubber sheet having a thickness of 0.5 mm, air (nitrogen : oxygen = 8:2) as a testing gas and a testing temperature of 25°C, and an air permeation coefficient (unit: $\times 10^{-11} cc \cdot cm/cm^2 \cdot sec \cdot cmHg$) was calculated. The air permeation resistance was expressed as an index by the following calculation formula, assuming an air permeation resistance index of Example 2 as 100. Further, an isothermal gas permeability measuring machine M-C1 manufactured by Toyo Seiki Seisaku-sho, LTD. was used for the measurement. The larger the air permeation resistance index is, the more excellent air permeation resistance is.

$$\text{(Air permeation resistance index)} = (\text{reciprocal of the air permeation index}) \div (\text{reciprocal of air permeation index of Example 2}) \times 100$$

Results of the above tests are shown in Tables 1 and 2.

TABLE 1

| | | Ex. | | | | | | Com. Ex. | |
|---|---|---|---|---|---|---|---|---|---|
| | | 1 | 2 | 3 | 4 | 5 | 6* | 1 | 2 |
| Amounts (part by weight) | | | | | | | | | |
| | NR | 30 | 30 | 30 | - | 30 | 65 | 30 | 30 |
| | ENR (1) | 70 | 70 | 70 | 100 | 70 | - | 70 | 70 |
| | ENR (2) | - | - | - | - | - | 35 | - | - |
| | Epoxidization index | 17.5 | 17.5 | 17.5 | 25 | 17.5 | 17.5 | 17.5 | 17.5 |
| | Carbon black | 5 | 5 | 5 | 5 | 5 | 5 | 5 | 5 |
| | Silica | 35 | 35 | 35 | 35 | 35 | 35 | 35 | 35 |
| | Calcium stearate | 3 | 6 | 6 | 6 | 6 | 6 | - | 9 |
| | Amount based on ENR (% by weight) | 4.3 | 8.6 | 8.6 | 6 | 8.6 | 17.1 | - | 12.9 |
| | Silane coupling agent | 2.8 | 2.8 | 2.8 | 2.8 | 2.8 | 2.8 | 2.8 | 2.8 |
| | Double bond-containing plasticizer (1) | 8 | 8 | 8 | 8 | 8 | 8 | 8 | 8 |
| | Wax | 1.5 | 1.5 | 1.5 | 1.5 | 1.5 | 1.5 | 1.5 | 1.5 |
| | Antioxidant | 2 | 2 | 2 | 2 | 2 | 2 | 2 | 2 |
| | Stearic acid | 2 | 2 | 2 | 2 | 2 | 2 | 2 | 2 |
| | Zinc oxide | 4 | 4 | 4 | 4 | 4 | 4 | 4 | 4 |
| | Sulfur | 1.5 | 1.5 | 1.5 | 1.5 | 1.5 | 1.5 | 1.5 | 1.5 |
| | Vulcanization accelerator | 1.8 | 1.8 | 1.8 | 1.8 | 1.8 | 1.8 | 1.8 | 1.8 |
| Distance from carcass ply cord (mm) | | 1.2 | 1.2 | 0.5 | 0.5 | 1.2 | 1.2 | 0.5 | 1.2 |
| Thickness of inner liner (mm) | | 0.9 | 0.9 | 1.6 | 1.2 | 1.6 | 1.6 | 1.6 | 0.9 |
| Evaluation results | | | | | | | | | |
| | Rubber strength index | 110 | 120 | 110 | 108 | 110 | 115 | 100 | 125 |
| | Rolling resistance index | 100 | 100 | 110 | 120 | 91 | 108 | 100 | 95 |
| | Air permeation resistance index | 102 | 100 | 110 | 120 | 130 | 112 | 103 | 98 |

* not according to invention

TABLE 2

| | | Ex. | |
|---|---|---|---|
| | | 7 | 8 |
| Amounts (part by weight) | | | |
| | Step 1 | | |
| | NR | 20 | 20 |
| | Carbon black | 5 | 5 |
| | Silica | 35 | 35 |
| | Calcium stearate | 6 | 6 |
| | Amount based on ENR (% by weight) | 7.5 | 7.5 |
| | Silane coupling agent | 2.8 | 2.8 |
| | Double bond-containing plasticizer (1) | 8 | 8 |
| | Wax | 1.5 | 1.5 |
| | Antioxidant | 2 | 2 |
| | Stearic acid | 2 | 2 |
| | Zinc oxide | 4 | 4 |

(continued)

| | | | |
|---|---|---|---|
| Step 2 | | | |
| | Masterbatch (1) | 88 | - |
| | Masterbatch (2) | - | 88 |
| | Masterbatch (3) | - | - |
| | Epoxidization index | 20 | 20 |
| Step 3 | | | |
| | Sulfur | 1.5 | 1.5 |
| | Vulcanization accelerator | 1.8 | 1.8 |
| Distance from carcass ply cord (mm) | | 1.2 | 1.2 |
| Thickness of inner liner (mm) | | 0.9 | 0.9 |
| Evaluation results | | | |
| | Rubber strength index | 130 | 128 |
| | Rolling resistance index | 100 | 98 |
| | Air permeation resistance index | 105 | 107 |

In Examples 1 and 2 wherein the amount of calcium stearate is 2 to 10 parts by weight on the basis of 100 parts by weight of ENR, rubber strength can be improved and crack resistance can be improved without increasing rolling resistance.

In Comparative Example 1 wherein calcium stearate is not contained, rubber strength is lowered and crack resistance is deteriorated.

In Comparative Example 2 wherein the amount of calcium stearate is more than 10 parts by weight on the basis of 100 parts by weight of ENR, rubber strength and crack resistance can be improved, however, rolling resistance is deteriorated.

According to the present invention, there is provided a rubber composition for an inner liner in which rubber strength can be improved without increasing rolling resistance and air permeability by compounding specified amounts of a specific rubber component, silica, carbon black and calcium stearate, and a tire having an inner liner, which comprises the rubber composition.

## Claims

1.  A rubber composition for an inner liner, comprising;
    silica in an amount of 30 to 40 parts by weight, and
    carbon black in an amount of not more than 5 parts by weight
    on the basis of 100 parts by weight of a rubber component comprising not less than 30 % by weight of an epoxidized natural rubber and not more than 70 % by weight of a natural rubber; and
    calcium stearate in an amount of 2 to 10 parts by weight
    on the basis of 100 parts by weight of said epoxidized natural rubber.

2.  The rubber composition for an inner liner of Claim 1, wherein the epoxidization index represented by the following formula (1):

$$(\text{Epoxidization index}) =$$

$$(\text{Amount of epoxidized natural rubber in the rubber component})$$

$$\text{x (Epoxidization ratio of epoxidized natural rubber)} \qquad (1),$$

in which the amount of the epoxidized natural rubber in the rubber component is the ratio of the epoxidized natural rubber on the basis of the whole rubber component as percentage,
is not less than 17.

3. The rubber composition for an inner liner of Claim 1, comprising the natural rubber in an amount of 20 to 45 % by weight in said rubber component, and
further comprising a double bond-containing plasticizer in an amount of 5 to 30 parts by weight on the basis of 100 parts by weight of said rubber component.

4. A process for preparing the rubber composition for an inner liner of Claim 1, comprising:

   a step (1) of preparing a kneaded product by kneading a natural rubber, silica, carbon black and calcium stearate; a step (2) of preparing a masterbatch by kneading an epoxidized natural rubber and a double bond-containing plasticizer; and a step (3) of kneading the kneaded product discharged in the step (1) and the masterbatch discharged in the step (2).

5. The rubber composition for an inner liner of Claim 1, which is obtained by the process for preparing the rubber composition for an inner liner of Claim 4.

6. A tire having an inner liner, which comprises the rubber composition for an inner liner of Claim 1.

7. A tire having an inner liner, which comprises the rubber composition for an inner liner of Claim 5.

8. The tire of Claim 6, wherein the distance between an inner liner and a carcass ply cord is not more than 0.7 mm, and the thickness of the inner liner is not less than 1 mm.

9. The tire of Claim 7, wherein the distance between an inner liner and a carcass ply cord is not more than 0.7 mm, and the thickness of the inner liner is not less than 1 mm.

**Patentansprüche**

1. Kautschukzusammensetzung für einen Innerliner, enthaltend:

   Silica in einer Menge von 30 bis 40 Gewichtsteilen und
   Ruß in einer Menge von nicht mehr als 5 Gewichtsteilen,
   auf der Basis von 100 Gewichtsteilen einer Kautschukkomponente, welche nicht weniger als 30 Gew.-% eines epoxidierten Naturkautschuks und
   nicht mehr als 70 Gew.-% eines Naturkautschuks enthält, sowie Calciumstearat in einer Menge von 2 bis 10 Gewichtsteilen
   auf der Basis von 100 Gewichtsteilen des epoxidierten Naturkautschuks.

2. Kautschukzusammensetzung für einen Innerliner nach Anspruch 1, wobei der durch die folgende Formel (1) wiedergegebene Epoxidierungsindex:

$$\text{(Epoxidierungsindex)} = \text{(Menge von epoxidiertem Naturkautschuk in der Kautschukkomponente)} \times \text{(Epoxidierungsanteil von epoxidiertem Naturkautschuk)} \qquad (1),$$

   wobei die Menge des epoxidierten Naturkautschuks in der Kautschukkomponente das Verhältnis des epoxidierten Naturkautschuks bezogen auf die gesamte Kautschukkomponente als Prozentsatz ist,
   nicht weniger als 17 beträgt.

3. Kautschukzusammensetzung für einen Innerliner nach Anspruch 1, welche den Naturkautschuk in der Kautschukkomponente in einer Menge von 20 bis 45 Gew.-% enthält und des weiteren einen Doppelbindung enthaltenden Weichmacher in einer Menge von 5 bis 30 Gewichtsteilen bezogen auf 100 Gewichtsteile der Kautschukkomponente enthält.

4. Verfahren zum Herstellen der Kautschukzusammensetzung für einen Innerliner nach Anspruch 1, umfassend:

einen Schritt (1) des Herstellens eines Knetprodukts durch Kneten eines Naturkautschuks, von Silica, von Ruß und von Calciumstearat,

einen Schritt (2) des Herstellens eines Masterbatchs durch Kneten eines epoxidierten Naturkautschuks und eines Doppelbindung enthaltenden Weichmachers, sowie einen Schritt (3) des Knetens des aus dem Schritt (1) kommenden Produkts und dem in dem Schritt (2) hergestellten Masterbatch.

5. Kautschukzusammensetzung für einen Innerliner nach Anspruch 1, welche durch ein Verfahren zum Herstellen der Kautschukzusammensetzung für einen Innerliner nach Anspruch 4 erhalten wird.

6. Reifen mit einem Innerliner, welcher die Kautschukzusammensetzung für einen Innerliner nach Anspruch 1 enthält.

7. Reifen mit einem Innerliner, welcher die Kautschukzusammensetzung für einen Innerliner nach Anspruch 5 enthält.

8. Reifen nach Anspruch 6, wobei der Abstand zwischen dem Innerliner und dem Karkassenlagencord nicht mehr als 0,7 mm beträgt und die Dicke des Innerliners nicht weniger als 1 mm beträgt.

9. Reifen nach Anspruch 7, wobei der Abstand zwischen dem Innerliner und dem Karkassenlagencord nicht mehr als 0,7 mm beträgt und die Dicke des Innerliners nicht weniger als 1 mm beträgt.

## Revendications

1. Composition de caoutchouc pour calandrage intérieur, comprenant :

de la silice en une quantité de 30 à 40 parties en poids, et
du noir de carbone en une quantité d'au plus 5 parties en poids sur la base de 100 parties en poids d'un composant caoutchouc comprenant pas moins de 30 % en poids d'un caoutchouc naturel époxydé et pas plus de 70 % en poids d'un caoutchouc naturel ; et
du stéarate de calcium en une quantité de 2 à 10 parties en poids sur la base de 100 parties en poids dudit caoutchouc naturel époxydé.

2. Composition de caoutchouc pour calandrage intérieur selon la revendication 1 où l'indice d'époxydation représenté par la formule (1) suivante :

$$\text{(indice d'époxydation)} = \text{(quantité de caoutchouc naturel époxydé dans le composant caoutchouc)} \times \text{(taux d'époxydation du caoutchouc naturel utilisé)} \qquad (1),$$

où la quantité de caoutchouc naturel époxydé dans le composant caoutchouc est le taux du caoutchouc naturel époxydé sur la base du composant caoutchouc total en pourcentage,
n'est pas inférieur à 17.

3. Composition de caoutchouc pour calandrage intérieur selon la revendication 1 comprenant le caoutchouc naturel en une quantité de 20 à 45 % en poids dans ledit composant caoutchouc, et comprenant en outre un plastifiant contenant une ou des doubles liaisons en une quantité de 5 à 30 parties en poids sur la base de 100 parties en poids dudit composant caoutchouc.

4. Procédé pour préparer la composition de caoutchouc pour calandrage intérieur selon la revendication 1, comprenant :

une étape (1) de préparation d'un produit malaxé par malaxage d'un caoutchouc naturel, de silice, de noir de carbone et de stéarate de calcium ; une étape (2) de préparation d'un mélange maître par malaxage d'un caoutchouc naturel époxydé et d'un plastifiant contenant une ou des doubles liaisons ; et une étape (3) de malaxage du produit malaxé déchargé dans l'étape (1) et du mélange maître déchargé dans l'étape (2).

5. Composition de caoutchouc pour calandrage intérieur selon la revendication 1 qui est obtenu par le procédé pour préparer la composition de caoutchouc pour calandrage intérieur selon la revendication 4.

**6.** Pneumatique ayant un calandrage intérieur qui comprend la composition de caoutchouc pour calandrage intérieur selon la revendication 1.

**7.** Pneumatique ayant un calandrage intérieur qui comprend la composition de caoutchouc pour calandrage intérieur selon la revendication 5.

**8.** Pneumatique selon la revendication 6 où la distance entre un calandrage intérieur et un câble de nappe de carcasse n'est pas supérieure à 0,7 mm, et l'épaisseur du calandrage intérieur n'est pas inférieure à 1 mm.

**9.** Pneumatique selon la revendication 7 où la distance entre un calandrage intérieur et un câble de nappe de carcasse n'est pas supérieure à 0,7 mm, et l'épaisseur du calandre intérieur n'est pas inférieure à 1 mm.

**EP 1 798 257 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005272508 A
- EP 1577341 A1
- EP 0448905 A1